# EUROPEAN PATENT SPECIFICATION

(11) **EP 0 892 892 B1**
(45) Date of publication and mention of the grant of the patent: **20.03.2002**
(21) Application number: 97918514.7
(22) Date of filing: 03.04.1997
(51) Int. Cl.: F16B 19/00, F16B 37/04

(54) **BLIND SNAP MOUNTED CLIP FASTENER**
BLINDSCHNAPPBEFESTIGUNGSELEMENT
FIXATION DE SERRAGE MONTEE PAR ENCLIQUETTEMENT EN AVEUGLE

(30) Priority: 05.04.1996 US 628846
(43) Date of publication of application: 27.01.1999
(73) Proprietor: Acevedo, Martin, Ashland, MA 01721 (US)
(72) Inventor: Acevedo, Martin, Ashland, MA 01721 (US)
(74) Representative: Hughes, Brian Patrick
(86) International application number: PCT/US97/05613
(87) International publication number: WO 97/38230

(56) References cited:
- EP-A- 0 077 695
- DE-A- 3 134 988
- FR-A- 2 687 439
- US-A- 3 373 789
- US-A- 3 505 922
- US-A- 4 923 347

## Description

### Field of the Invention

The present invention relates to clip fasteners of the type used to join a component work piece to a work piece wherein a portion of the fastener extends into an aperture in the work piece so that a securing member may pass through a corresponding aperture in the component work piece and into the fastener to secure the component work piece to the fastener.

### Background of the Invention

Clip fasteners are used in the automobile industry to attach and assemble moldings, trim pieces and other component work pieces to a work piece such as a body panel, or frame member. In the electronic and communications industry, clip fasteners are used to assemble and attach electronic chassis assemblies or component work pieces to support structures, such as equipment racks and cabinets.

Such clip fasteners are formed with retaining tabs which are sheared and formed into side legs, so that when the fastener legs are inserted in a work piece aperture or opening, the tabs resiliently engage edges of the opening to retain the fastener in place within the work piece aperture. A securing member such as a screw extends through an aperture within a component work piece so that the aperture in the component work piece corresponds with the work piece aperture to mechanically secure the component work piece to the fastener and hence the work piece. Exemplary clip fasteners are shown in U.S. Patent No. 4,595,325; and U.S. Patent No. 3,795,890. An example of a clip fastener that uses retaining tabs sheared and formed from side legs is described in U.S. Patent No. 3,645,311.

Clip fasteners of this general type have been used for securement to relatively rigid work pieces or members made of metal or plastic. In order to prevent the fastener from turning or rotating relative to a work piece when torque is applied to a securing member to join the work piece with a component work piece, an aperture in the work piece that receives the fastener is made rectangular, non-circular or given some other irregular shape, or the fastener and work piece are provided with abutting shoulders. U.S. Patent No. 4,798,507 to Olah, entitled "Sheet Metal U-Nut", is an example of a fastener abutting a work piece, wherein a "u-nut" clips into an aperture in the work piece spaced a specific distance from an edge of the work piece. The edge abuts a u-nut hinge surface and prevents the u-nut from rotating upon application of torque to a securing member within the fastener. U.S. Patent No. 4,595,325 to Moran shows a fastener of the general type requiring a rectangular opening on the work piece to prevent the fastener from turning relative to the work piece upon application of torque to a securing member or screw used to joining the two work pieces.

Fasteners of the general type that are required to be installed in a rectangular or non-circular opening or aperture in a work piece are limited in their scope of application and use. The non-circular opening is usually of a unique shape that requires usage of a special sheet metal punch and die-set to form the opening. In a high volume production environment it is undesirable to use non-circular or rectangular shaped metal punches because sharp corners of the die-sets wear out quickly and therefore the opening produced fails to meet dimensional specifications. As a result, parts produced are rejected and production is suspended while the worn out die-sets are replaced. Another unfavorable factor is high levels of stress concentration at corners of rectangular or non-circular apertures within a work piece. Under a vibration environment such corners will cause sheet metal work pieces to fatigue and crack open at the corners so that the fastener looses its grip on the work piece. The same mode of failure occurs on a rectangular or non-circular aperture in a plastic panel. On an automobile exposed to weather and operational stresses, cracked sheet metal work pieces corrode and integrity of the entire automobile is jeopardized.

U.S. Patent No. 5,176,482 to Reinl discloses a mounting assembly for motor vehicles. It shows a sheet metal nut held in a restricted and readily movable manner on a body sheet of an automobile, by two rectangular mounting openings and adjacent lateral beads. Such a construction is to insure accommodation of considerable tolerance accumulation between a position of an opening or aperture on the body sheet, a position of the fastener, and a position of a component work piece. Operation of the Reinl fastener requires a unique and complex preparation of the body sheet with two rectangular openings plus two specially shaped beads formed on the body sheet. The rectangular openings accommodate some amount of tolerance accumulation along axes parallel and perpendicular to a surface of the body sheet, but if the openings were made circular with a diameter equal to a diagonal distance between corners of the rectangular opening, such a round opening would accommodate larger tolerance accumulations by allowing the fastener to move all-around an interior of such circular openings in a diametrical manner.

U.S. Patent No. 4,300,865 to Murray discloses a blind clip fastener for anchoring into a circular or round aperture in a work piece. An object of the fastener disclosed in Murray is to provide a fastener of the blind clip type particularly suitable for securing to members or panels made of relatively soft material such as sheet molded fiberglass compounds. The Murray fastener resists turning when seated in a round hole by driving sharp edges into the soft work piece material. That fastener is intended for limited application. It cannot be used on sheet metal panels or hard plastic parts because it would turn under the torque applied to a screw. The Murray fastener is also intended to be used to support only light pieces, such as trims and moldings, because it has just a single threaded helix formed on its head. Multiple threads are formed or tapped on fasteners that are required to withstand the higher torque values applied to screws supporting large work piece components such as commonly found in automobile assembly.

A snap-in Teenut® fastener manufactured by American Engineered Components, of Cambridge, Massachusetts, United States of America, is a fastener with tabs or pawls sheared and formed from side legs in a similar manner as described in U.S. Patent No. 3,645,311, and also includes an internally threaded sleeve drawn from a portion of the fastener. The Teenut® fastener is designed to snap into a rectangular hole to prevent it from turning relative to a work piece; it is not provided with anti-vibration features to grip and adjust to variations in material thickness; it is not provided with any structure to accommodate accumulations of tolerances; and, it is not provided with any structure to induce a locking torque on the threads within the sleeve and to thereby prevent an engaged, threaded securing member from turning loose.

Known clip fasteners therefore suffer from a number of disadvantages, including:
A. A single formed screw thread on a head of many fasteners limits an amount of torque the fastener can withstand and an amount of holding force that can be applied to the fastener. A capacity for holding a threaded securing member within the fastener is also limited by such a single formed thread on the head of such fasteners.
B. A need for a rectangular, or non-circular work piece opening or aperture to prevent the fastener from turning is a structural integrity limitation and a product reliability concern. A related need for a special rectangular or non-circular punch and die-set for preparation of the work piece aperture is likewise a manufacturing limitation and increased cost concern.
C. "U-nut" types of fasteners such as disclosed in U.S. Patent No. 5,176,482 to Reinl are limited by a need to be installed abutting or adjacent and edge of a panel, thus creating a severe positional limitation. Additionally, such fasteners cannot be easily installed inside an existing panel. Reinl types of fasteners also typically require non-circular apertures in a work pieces, and complex securing beads on work piece surfaces.
D. Known clip fasteners are restricted in usage to only large manufacturing facilities that have access to necessary machine tools and special punch and die-sets used to form rectangular or non-circular apertures within work pieces required for installation of those fasteners in the apertures. The general public can not use these fasteners simply because the tools required for their installation are not readily available or easy to use.

A need therefore exists for a low cost, blind snap mounted clip fastener applicable to a circular aperture within a work piece that is simple to manufacture, easy to use, and that is provided with simple features to prevent such a fastener from rotating relative to the work piece. A need likewise exists for such an improved fastener that would be available for usage by the general public for personal needs, wherein the fastener can be applied to a work piece by a simple home tool such as a drill.

Accordingly, it is a general object of the present invention to provide an improved fastener that overcomes structural, positional, strength, manufacture, cost and related deficiencies of the prior art.

It is a more specific object to provide an improved fastener that can be secured within a circular aperture within a work piece.

It is another specific object to provide an improved fastener that resists rotation relative to a work piece when the fastener is anchored within a circular work piece aperture.

It is yet another object of the present invention to provide an improved fastener that can be applied by application of a common drill.

It is another specific object to provide an improved fastener that includes a self-locking and anti-vibration structure.

It is an additional object to provide an improved fastener capable of being secured to both sheet metal and molded plastic, and that can withstand standard torque values for either automobile or electronics manufacture.

It is yet another object of the present invention to provide an improved fastener that is easy and inexpensive to manufacture.

The above and other advantages of the present invention will become more readily apparent when the following description is read in conjunction with the accompanying drawings.

### Summary of the Invention

A blind snap mounted clip fastener is disclosed for inserting into a mounting aperture and an anti-rotate aperture of a work piece to secure a component work piece to the fastener. In a preferred embodiment, the fastener includes a base portion defining a generally cylindrical sleeve for receiving a securing member; a cylinder-shaped segment integral with and extending generally downward and perpendicular to the base portion; a locking arm projecting outwardly from the base portion; and an anti-rotate tab extending from the locking arm downwardly and generally perpendicular to the base portion. The anti-rotate tab is dimensioned to extend into the anti-rotate aperture of the work piece whenever the cylinder-shaped segment of the fastener is inserted into the mounting aperture of the work piece so that the anti-rotate tab and anti-rotate aperture cooperate to prevent rotation of the fastener when a rotational force is applied to the securing member in securing the component work piece to the fastener. In additional embodiments, the blind snap mounted clip fastener includes a locking pawl defined within a plurality of cylinder-shaped segments so that the locking pawl extends away from the cylinder sleeve to lock the fastener within the mounting aperture and dampen vibrations between the fastener and work piece.

### Brief Description of the Drawings

Figure 1A is a perspective view of a blind snap mounted clip fastener constructed in accordance with the present invention.
Figure 1B is a perspective view of the Figure 1A blind snap mounted clip fastener showing the Figure 1A fastener rotated approximately ninety degrees clockwise.
Figure 2 is a perspective view of the Figure 1A blind snap mounted clip fastener showing the fastener above a work piece and below a component work piece and a threaded securing member.
Figure 3 is a top plan view of a blind snap mounted clip fastener of the present invention inserted within a work piece.
Figure 4 is a cross-sectional view of the Figure 3 blind snap mounted clip fastener taken along view line 4-4 of Figure 3.
Figure 5 is a cross-sectional view of the Figure 3 blind snap mounted clip fastener taken along view line 5-5 of Figure 3, and showing a component work piece and threaded securing member within the fastener.
Figure 6 is a cross-sectional view of the Figure 3 blind snap mounted clip fastener taken along view line 6-6 of Figure 3.
Figure 7 is a cross-sectional view of the Figure 3 blind snap mounted clip fastener taken along view line 7-7 of Figure 3, and showing a component work piece and threaded securing member within the fastener.
Figure 8 is a perspective view of an alternative embodiment of the blind snap mounted clip fastener of the present invention.

### Description of the Preferred Embodiments

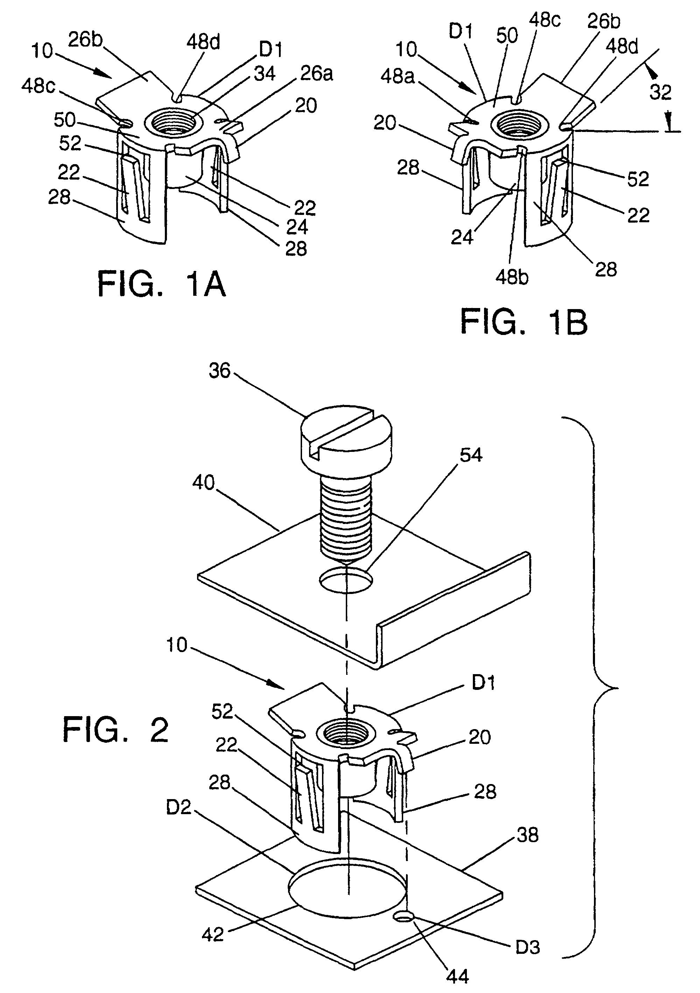

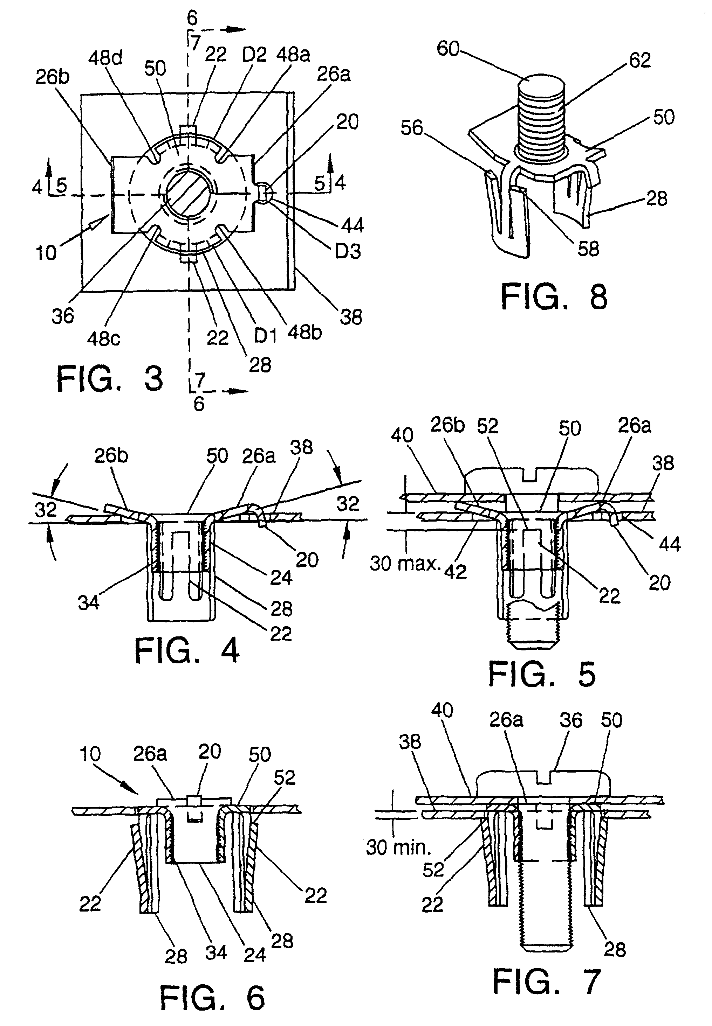

Referring to the drawings in detail, a blind snap mounted clip fastener of the present invention is shown in FIGS. 1 - 7, and generally designated by the reference numeral 10. The blind snap mounted clip fastener has a base portion 50 that is substantially flat and from which a sleeve 24 is drawn. The sleeve 24 may have a first generally planar conical portion and a second generally cylindrical portion as shown in FIG. 4. The sleeve may have a plurality of threads 34, as does the sleeve 24 shown in FIGS. 1A and 1B. The threads may be machined, tapped, or rolled-tapped.

A pair of cylinder-shaped segments 28 extending from and generally perpendicular to the base portion 50 are opposed to each other and spaced apart within a diameter D1 concentric to the sleeve 24. A plurality of bend relief cuts 48a, 48b, 48c, and 48d (shown in FIB. 1B) facilitate bending and forming of the cylinder segments 28. Along a central portion of each cylinder segment 28 a locking pawl 22 is sheared and shaped, and bent outwardly away from sleeve 24. FIG. 1A, FIG. 1B and FIG. 4 show a pair of locking arms 26a and 26b or wings projecting outwardly from the base portion 50, so that locking arm 26a is positioned between bend relief 48a and 48b (seen in FIG. 1B) and locking arm 26b is positioned between bend relief 48c and 48d. Locking arms 26a and 26b are bent upwardly away from the cylinder segments 28 to an angle 32 (shown in FIGS. 1B and 4). An anti-rotate tab 20 extends outwardly from an end and center of locking arm 26a and bends generally downwardly perpendicular to locking arm 26a, toward the cylinder segments 28.

FIG. 2 shows a panel or work piece 38 with a mounting aperture 42 of a diameter D2 and an anti-rotate aperture 44 of diameter D3. Component work piece 40 (also shown in FIG. 2) includes an aperture 54. A securing member such as a standard screw 36 may be inserted through the aperture 54 of the component work piece 40 to secure the component work piece to the fastener 10 as the screw 36 is threaded into sleeve 24. As is apparent in FIG. 2, the mounting aperture 42 of the work piece 38 has a diameter D2 that is dimensioned to be larger than the diameter D1 which represents a diameter defined by the cylinder segments 28. Similarly, diameter D3 of the anti-rotate aperture 44 is also dimensioned to be larger that a width and breadth of anti-rotate tab 20. Such a construction allows substantial tolerance accumulation and compensation for any misalignment between a position of the apertures 44, 42 on a work piece 38, a position of the fastener 10, and a position of the aperture 54 in a component work piece 40, which is especially beneficial where assembly involves multiple and complex locations of mounting apertures.

The blind snap mounted clip fastener 10 of the present invention may be stamped from a single sheet material such as metal, plastic, etc., wherein the sheet may have a relatively small area so that a minimum amount of fabrication material (not shown) is required to manufacture the fastener 10. For such a manufacture of the fastener 10, first the fastener is stamped from a single piece of sheet material such as a common metal to form the locking arms 26a, 26b with the anti-rotate tab 20. Then the cylinder segments 28 with their locking pawls 22 are sheared and shaped, and next the sleeve 24 is drawn and threads may be tapped into the sleeve 24 either before or after the fastener 10 is bent into a shape shown in FIGS 1A and 1B. *The* threads 34 along an inner surface of the sleeve 24 may be formed by a roll-tapping process with a tap of a shape conforming to a thread of a threaded securing member intended for usage with the fastener, such as screw 36, in a process well-known in the industry. Although the blind snap mounted clip fastener may be fabricated from a variety of suitable materials made of resilient metals or plastics, it has been found particularly advantageous to manufacture the fastener 10 from type 1050 steel and to heat treat the fastener after formation from the steel.

As best seen in FIGS. 2 - 7, the fastener 10 is inserted into work piece 38 by first aligning the cylinder segments 28 with the mounting aperture 42 and by aligning the anti-rotate tab 20 with the anti-rotate aperture 44, and by then guiding the fastener into the apertures 42, 44. As the fastener 10 is inserted through the work piece, the locking pawls 22 engage an edge of the mounting aperture 42 and resiliently deflect toward the sleeve 24. When an underside of the locking arms 26a, 26b contact the work piece 38, the locking pawls 22 clear the mounting aperture and snap back into their unstressed position defining a diameter greater that D2 the diameter of the mounting aperture, so that the pawls bite into an undersurface of the work piece to resist movement out of the mounting aperture 38 whenever a force is applied to the fastener pulling it out of the mounting aperture. Simultaneously, the anti-rotate tab 20 is positioned within the anti-rotate aperture 44 to prevent rotation of the fastener 10 in any direction relative to the work piece 38 whenever a rotational force is applied to the securing member 36.

It is stressed that this rotational securement of the fastener 10 to the work piece 38 occurs before the securing member 36 is turned completely into the threaded portion of the sleeve 24. If such rotation occurred, it would be practically impossible to tighten the screw 36 within the fastener, or to remove it therefrom, particularly, as is often the case, when access cannot be obtained to the undersurface of the work piece 38 in order to grip the fastener. It is further stressed that the fastener 10 may readily be installed in various types of work pieces without any special installation tools or equipment resulting in further costs savings and ease of application of the fastener in a production line where time and ease of applications of fasteners is valued.

Mounting and anti-rotate apertures 42, 44 may be dimensioned to allow the fastener to be readily rotated within the mounting fastener until application of a rotational force to the fastener by a securing member so_ that upon rotational contact by the securing member 36 the fastener rotates until the anti-rotate tab 20 enters the anti-rotate aperture 44 to secure the fastener against further rotation and thereby force the securing member to enter the sleeve 24.

FIGS. 3, 5 and 7 show an assembly process including the fastener 10, work piece 38, component work piece 40 and securing member 36. The fastener 10 is shown inserted into the sleeve 24 of the fastener 10. The locking arms 26a and 26b rest on a top edge of the mounting aperture 42 and a top surface of the base portion 50. The locking pawl 22 is shown lowered into the mounting aperture 42 and a top edge 52 of the pawl is positioned approximately adjacent the bottom surface of the work piece 38. In such a position, the fastener 10 defines a fastener grip range 30 as a distance between the top surface of the work piece 38 and the top edge 52 of the locking pawl. That fastener grip range is shown at a maximum in FIG. 5 referred to as "30 max." By allowing a large fastener grip range 30, a wide variety of work piece thicknesses can be utilized with the fastener 10. As the screw 36 is threaded into the sleeve 24 a force is applied to cause the base portion 50 of the fastener to rise up until the top edge 52 of the pawl 22 contacts and stops against the under surface of the work piece 38. At the same time, the locking arms 26a, 26b are deflected by the same force and by contact with an under surface of the component work piece 40 into a position wherein the locking arms define a plane parallel to planes defined by the work pieces 38, 40 as shown in a transition between FIG. 5 and FIG. 7. In that position shown in FIG. 7, the grip range 30 is at a minimum referred to in FIG. 7 as "30 min.", which is equal to a thickness of the material comprising the work piece 38.

It is stressed that the fastener 10 includes and anti-vibration feature which results from tensile force developed by torque applied through the securing member 36 which acts as a locking force between the under surface of the work piece 38 and the top edge 52 of the locking pawl 22. The edge 52 of the pawl bites into the work piece and prevents the assembled fastener and work pieces from rattling and loosening under a vibration environment.

Similarly, the resilient locking arms 26a, 26b when bent at a lock angle 32 (shown in FIGS. 1b and 4) form a self-locking feature of the present fastener 10. The locking arms perform the same function a common split lock washer would perform in an assembly including a screw, nut, flat washer and a split lock washer. FIG. 5 shows an assembly sequence wherein the screw 36 has been inserted through the component work piece 40 and partially threaded into the fastener 10, and the under surface of the component work piece 40 has made contact with the locking arms 26a, 26b and the top edge 52 of the locking pawl 22 has made contact with the under surface of the work piece 38. As the screw continues to be threaded into the fastener 10, the under surface of the component work piece 40 applies a vertical downward force (or a force toward the sleeve 24) on the locking arms 26a, 26b, and resiliently deflects the arms to a horizontal position between the work pieces 38, 40, as shown in FIG. 7. The locking arms in their deflected, horizontal position, therefore apply a constant tensile force on the screw threads. The tensile force is resisted and opposed by the internal sleeve threads 34, resulting in an induced locking torque that prevents the screw 36 from turning freely.

While the above description has been described with respect to a particular construction, it will be understood by those skilled in the art that the present blind snap mounted clip fastener invention is not limited to that particular example. Many embodiments are possible. For example, for some applications a multi-threaded sleeve may not be necessary and a single thread helix may be stamped instead on the base portion 50 of the fastener; the locking arms 26a, 26b may be shaped in many different forms and positioned in many different manners; the bend relief cuts are not always necessary under different manufacturing and configuration options; the cylinder segments 28 could be turned inwardly sufficiently to enable a threaded securing member to be received from the sleeve 24 therebetween and induce a prevailing torque by the force applied against the threads. In an alternative embodiment shown in FIG. 8, the cylinder segments 28 may include locking pawls of many different forms, such as resilient arms 56, 58 turned downwardly, away from opposed edges of the base portion in a spaced-apart relationship and then extending outwardly away from each other and upwardly to a position below the base portion and concentric to the sleeve 24. Also in the FIG. 8 alternative embodiment, the sleeve 24 is drawn upwardly as a stud 60 from the base portion 50 with external threads 62 about an external surface of the stud 60. Finally, material used for fabrication, and an exterior finish of the fastener may be adjusted to best suit expected usage and environmental exposure.

Accordingly, reference should be made primarily to the attached claims rather than the foregoing specification to determine the scope of the invention.

## Claims

1. A blind snap mounted clip fastener (10) for inserting into a mounting aperture (42) and an anti-rotate aperture (44) of a work piece (38) to secure a component work piece (40) to the fastener, said fastener being **characterised by** a base portion (50) defining a generally cylindrical sleeve (24, 60) for receiving a securing member (36), a cylinder shaped segment (28) integral with and extending generally downwardly and perpendicular to the base portion (50), a locking arm (26a) projecting outwardly from the base portion (50), and an anti-rotate tab (20) extending from the locking arm (26a) downwardly and generally perpendicular to the base portion, the tab (20) being dimensioned to extend into the anti-rotate aperture (44) of the work piece (38) whenever the cylinder shaped segment (28) of the fastener (10) is inserted into the mounting aperture (42) of the work piece (38) so that the tab (20) and anti-rotate aperture (44) cooperate to prevent rotation of the fastener (10) when a rotational force is applied to the securing member (36) in securing the component work piece (40) to the fastener (10).

2. A fastener (10) as claimed in claim 1, **characterised by** a plurality of said cylinder shaped segments (28a, 28b).

3. A fastener (10) as claimed in claim 1 or claim 2, **characterised in that** the or each cylinder-shaped segment (28a, 28b) includes a locking pawl (22) extending from the segment away from the cylindrical sleeve (24).

4. A fastener (10) as claimed in any preceding claim, **characterised in that** a second locking arms (26b) is provided extending away from the base portion.

5. A fastener (10) as claimed in claim 4, **characterised in that** the locking arms (26a, 26b) are angularly bent away from the base portion.

6. A fastener (10) as claimed in any preceding claim, **characterised in that** the sleeve (24) is threaded (34) on an internal surface.

7. A fastener (10) as claimed in any of claims 1 to 5, **characterised in that** the sleeve (24) extends upwardly away from the base portion (50).

8. A fastener (10) as claimed in claim 7, **characterised in that** the sleeve (24) is a stud (60) threaded (62) on its external surface.

9. A fastener (10) as claimed in claim 6 or claim 8, **characterised in that** a plurality of threads are provided.

10. A fastener (10) as claimed in any preceding claim, in combination with a threaded securing member.

## Patentansprüche

1. Eine blinde Einschnapp-Clipsbefestigung (10) die in ein Befestigungsloch (42) eingeschoben wird und in ein Arretierloch (44) eines Werkstücks (38) zur Sicherung eines Komponentenwerkstücks (40) an der Befestigung, wobei die genannte Befestigung **dadurch gekennzeichnet ist, dass** sie einen Basisteil (50) aufweist, der eine im wesentlichen zylindrische Hülse (24, 60) bildet zur Aufnahme eines Sicherungsgliedes (36), einen zylindrischen Teil (28) der ein integraler Bestandteil des Basisteils (50) ist und im wesentlichen nach unten und rechtwinkling zu diesem verläuft, einen Sicherungshebel (26a), der nach aussen vom Basisteil (50) hervorsteht, einen Gegenlauflappen (20), der vom Sicherungshebel (26a) nach unten und im wesentlichen rechtwinklig zum Basisteil verläuft, wobei der Lappen (20) so dimensioniert ist, dass er in das Arretierloch (44) des Werkstücks (38) hineinragt, wenn der zylindrische Teil (28) der Befestigung (10) in das Befestigungsloch (42) des Werkstücks (38) eingeschoben wird, so dass der Lappen (20) und das Arretierloch (44) zusammenwirken, um ein Drehen der Befestigung (10) zu verhindern, wenn eine Drehkraft auf das Sicherungsglied (36) während der Sicherung des Komponentnewerkstücks (40) an der Befestigung (10) ausgeübt wird.

2. Befestigung (10) gemäss Anspruch 1, **dadurch gekennzeichnet**, sie eine Vielzahl der genannten zylindrischen Teile (28a, 28b) aufweist.

3. Befestigung (10) gemäss Anspruch 1 oder 2, **dadurch gekennzeichnet, dass** der oder jedes zylindrische Teil (28a, 28b) ein Verriegelungselement (22) aufweist, das vom Teil aus in die von der zylindrischen Hülse (24) distalen Richtung verläuft.

4. Befestigung (10) gemäss jedem der vorstehenden Ansprüche, **dadurch gekennzeichnet, dass** sie einen zweite Sicherungshebel (26b) aufweist, der vom Basisteil weg verläuft.

5. Befestigung (10) gemäss Anspruch 4, **dadurch gekennzeichnet, dass** die Sicherungshebels (26a, 26b) im Winkel vom Basisteil weggebogen sind.

6. Befestigung (10) gemäss jedem der vorstehenden Ansprüche, **dadurch gekennzeichnet, dass** die Hülse (24) ein Innengewinde (34) aufweist.

7. Befestigung (10) gemäss jedem der vorstehenden Ansprüche 1 bis 5, **dadurch gekennzeichnet, dass** die Hülse (24) nach oben und weg vom Basisteil (50) verläuft.

8. Befestigung (10) gemäss Anspruch 7, **dadurch gekennzeichnet, dass** die Hülse (24) ein Bolzen (60) mit Innengewinde (62) ist.

9. Befestigung (10) gemäss Anspruch 6 oder 8, **dadurch gekennzeichnet, dass** mehrere Gewinde angeboten werden.

10. Befestigung (10) gemäss jedem der vorstehenden Ansprüche zusammen mit einem Sicherungsglied mit Gewinde.

## Revendications

1. Une agrafe de fixation encliquetable borgne (10) pour insertion dans un orifice de montage (42) et un orifice antirotation (44) d'une pièce (38) pour fixer une pièce constituante (40) à l'agrafe, ladite agrafe étant **caractérisée par** une portion base (50) définissant un manchon généralement cylindrique (24, 60) pour recevoir un élément de fixation (36), un segment en forme de cylindre (28) solidaire de la portion base (50) et s'étendant généralement vers le bas et perpendiculairement à cette dernière, un bras de verrouillage (26a) dépassant de la portion base (50), et une languette antirotation (20) s'étendant du bras de verrouillage (26a) vers le bas et généralement perpendiculairement à la portion base, la languette (20) étant dimensionnée pour s'étendre dans l'orifice antirotation (44) de la pièce (38) à chaque fois que le segment en forme de cylindre (28) de l'agrafe (10) est inséré dans l'orifice de montage (42) de la pièce (38) de sorte que la languette (20) et l'orifice antirotation (44) coopèrent pour empêcher la rotation de l'agrafe (10) lorsqu'une force de rotation est appliquée à l'élément de fixation (36) lors de la fixation de la pièce constituante (40) à l'agrafe (10).

2. Une agrafe (10) comme revendiqué dans la revendication 1, **caractérisée par** une pluralité desdits segments en forme de cylindres (28a, 28b).

3. Une agrafe (10) comme revendiqué dans la revendication 1 ou la revendication 2, **caractérisée en ce que** le segment en forme de cylindre ou chaque segment en forme de cylindre (28a, 28b) comporte un cliquet de verrouillage (22) s'étendant à partir du segment de l'autre côté du manchon cylindrique (24).

4. Une agrafe (10) comme revendiqué dans toute revendication précédente, **caractérisée en ce qu'**un deuxième bras de verrouillage (26b) est fourni s'étendant de l'autre côté de la portion base.

5. Une agrafe (10) comme revendiqué dans la revendication 4, **caractérisée en ce que** les bras de verrouillage (26a, 26b) sont pliés de façon angulaire de l'autre côté de la portion base.

6. Une agrafe (10) comme revendiqué dans toute revendication précédente, **caractérisée en ce que** le manchon (24) est fileté (34) sur une surface interne.

7. Une agrafe (10) comme revendiqué dans l'une des revendications 1 à 5, **caractérisée en ce que** le manchon (24) s'étend vers le haut de l'autre côté de la portion base (50).

8. Une agrafe (10) comme revendiqué dans la revendication 7, **caractérisée en ce que** le manchon (24) est un goujon (60) fileté (62) sur sa surface externe.

9. Une agrafe (10) comme revendiqué dans la revendication 6 ou la revendication 8, **caractérisée en ce qu'**une pluralité de filets sont fournis.

10. Une agrafe (10) comme revendiqué dans toute revendication précédente, en association avec un élément de fixation fileté.
